(19) Europäisches Patentamt / European Patent Office / Office européen des brevets

(11) **EP 4 235 855 A1**

(12) **EUROPEAN PATENT APPLICATION**
published in accordance with Art. 153(4) EPC

(43) Date of publication:
**30.08.2023 Bulletin 2023/35**

(21) Application number: **21897609.0**

(22) Date of filing: **28.10.2021**

(51) International Patent Classification (IPC):
**H01M 4/14** (2006.01)        **H01M 4/62** (2006.01)
**H01M 10/06** (2006.01)

(52) Cooperative Patent Classification (CPC):
**H01M 4/14; H01M 4/62; H01M 10/06**

(86) International application number:
**PCT/JP2021/039830**

(87) International publication number:
**WO 2022/113633 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2020 JP 2020197585**

(71) Applicant: **GS Yuasa International Ltd.**
**Kisshoin, Minami-ku,**
**Kyoto-shi, Kyoto 601-8520 (JP)**

(72) Inventor: **KOJIMA, Rikio**
**Kyoto-shi, Kyoto 601-8520 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **LEAD STORAGE BATTERY**

(57)     A lead-acid battery includes at least one cell including an element and an electrolyte solution. The element includes a negative electrode plate, a positive electrode plate, and a separator interposed between the negative electrode plate and the positive electrode plate. The negative electrode plate includes a negative electrode material. The negative electrode material contains a polymer compound having a peak in a range of 3.2 ppm or more and 3.8 ppm or less in a chemical shift of $^1$H-NMR spectrum measured using deuterated chloroform as a solvent. The positive electrode plate includes a positive electrode material. A mass ratio of the positive electrode material to the negative electrode material is 1 or more and 1.4 or less.

Fig. 1

**Description**

TECHNICAL FIELD

The present invention relates to a lead-acid battery.

BACKGROUND ART

Lead-acid batteries are in use for various applications, including automotive and industrial applications. The lead-acid batteries include a negative electrode plate, a positive electrode plate, a separator (or mat), an electrolyte solution, and the like. Each electrode plate includes a current collector and an electrode material.

An additive may be added to constituent members of the lead-acid battery from the viewpoint of imparting various functions to the lead-acid battery. For example, Patent Document 1 proposes a lead-acid battery including, in an electrolyte solution and/or an electrode active material molded body, a polymer compound containing any one of the group consisting of polyvinyl alcohol, polyethylene glycol, polyvinylpyrrolidone, polyacrylic acid, or esters thereof having a degree of polymerization of 30 or more and 3,000 or less, or either the polymer compound or colloidal barium sulfate particles.

The lead-acid battery is sometimes used in a poor charged state called partial state of charge (PSOC). For example, lead-acid batteries mounted on idling stop system (ISS) vehicles are used in PSOC. When the lead-acid battery is repeatedly used in the PSOC, stratification may proceed in which a specific gravity of the electrolyte solution in an upper portion of the battery decreases and the specific gravity of the electrolyte solution in a lower portion of the battery increases. As the stratification proceeds, lead sulfate is likely to accumulate under the electrode plate. When the accumulation of lead sulfate becomes remarkable, a phenomenon occurs in which the accumulated lead sulfate is hardly reduced to lead even when charged (sulfation). Meanwhile, since a charge-discharge reaction is likely to occur on an upper side of the electrode plates, softening and falling off of the positive electrode material becomes remarkable on an upper side of the positive electrode plate. As a result, the life of the lead-acid battery is reduced. Therefore, it is required to improve the life when the lead-acid battery is used in the PSOC.

Patent Document 2 discloses a lead-acid battery including a container having a cell chamber, an element provided in the cell chamber and having a separator and positive and negative electrode plates alternately stacked with the separator interposed therebetween, and an electrolyte solution accommodated in the cell chamber. The positive electrode plate includes a positive electrode material filled portion formed of a positive electrode material, a positive current collector supporting the positive electrode material filled portion, and a positive electrode lug part provided on an upper peripheral edge portion of the current collector, and the negative electrode plate includes a negative electrode material filled portion formed of a negative electrode material, a negative current collector supporting the negative electrode material filled portion, and a negative electrode lug part provided on an upper peripheral edge portion of the current collector. When a total surface area of the positive electrode material filled portion and the negative electrode material filled portion is denoted by S1, a total surface area of the positive electrode material filled portion and the negative electrode material filled portion is denoted by S1, and an apparent total volume of the positive electrode material filled portion and the negative electrode material filled portion is denoted by V1, S1/V1 is 8.9 $cm^{-1}$ or more, and when a mass of the positive electrode material is denoted by p1 and a mass of the negative electrode material is denoted by n1, p1/n1 is 1.35 or more.

PRIOR ART DOCUMENTS

PATENT DOCUMENTS

Patent Document 1: JP-A-2000-149981
Patent Document 2: WO 2017/099144 A

SUMMARY OF THE INVENTION

PROBLEMS TO BE SOLVED BY THE INVENTION

When a lead-acid battery is charged and discharged in a PSOC cycle, sulfation particularly greatly affects the life. In order to suppress sulfation, it is advantageous to reduce mass ratio of the positive electrode material to the negative electrode material (hereinafter, referred to as PAM/NAM ratio). However, even if the PAM/NAM ratio is actually reduced, the PSOC life performance cannot be improved so much. In addition, when the PAM/NAM ratio is reduced, reduction of the electrolyte solution becomes remarkable. Therefore, it is difficult to reduce the reduction amount of the electrolyte solution while securing high life performance when the lead-acid battery is charged and discharged in the PSOC cycle.

MEANS FOR SOLVING THE PROBLEMS

One aspect of the present invention relates to a lead-acid battery comprising at least one cell comprising including an element and an electrolyte solution,

wherein the element includes a negative electrode plate, a positive electrode plate, and a separator interposed between the negative electrode plate and the positive electrode plate,
the negative electrode plate includes a negative electrode material,
the negative electrode material contains a polymer compound having a peak in a range of 3.2 ppm or more and 3.8 ppm or less in a chemical shift of $^1$H-NMR spectrum measured using deuterated chloroform as a solvent,
the positive electrode plate includes a positive electrode material, and
a mass ratio of the positive electrode material to the negative electrode material is 1 or more and 1.4 or less.

Another aspect of the present invention relates to a lead-acid battery comprising at least one cell comprising including an element and an electrolyte solution,

wherein the element includes a negative electrode plate, a positive electrode plate, and a separator interposed between the negative electrode plate and the positive electrode plate,
the negative electrode plate includes a negative electrode material,
the negative electrode material contains a polymer compound containing a repeating structure of oxy $C_{2-4}$ alkylene units,
the positive electrode plate includes a positive electrode material, and
a mass ratio of the positive electrode material to the negative electrode material is 1 or more and 1.4 or less.

BRIEF DESCRIPTION OF THE DRAWINGS

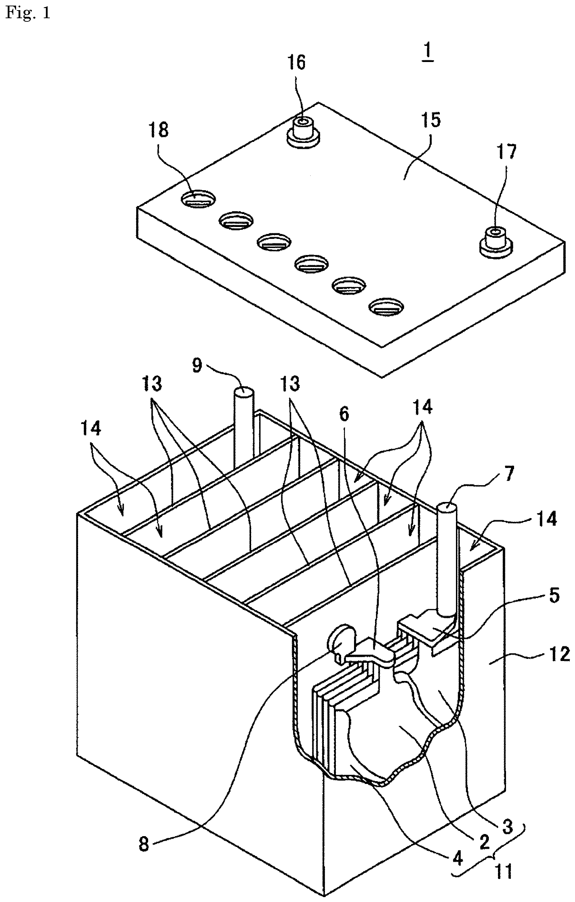

Fig. 1 is a partially cutaway exploded perspective view showing an appearance and an internal structure of a lead-acid battery according to one aspect of the present invention.

MODE FOR CARRYING OUT THE INVENTION

In general, in a lead-acid battery, when the PAM/NAM ratio is reduced, the utilization factor of the negative electrode material is reduced, so that sulfation in the negative electrode plate is reduced, and the life performance (hereinafter, may be referred to as a PSOC life) when charge-discharge are repeated in the PSOC cycle can be improved to some extent. However, since the potential of the negative electrode plate is shifted in a noble direction, a hydrogen overvoltage is reduced, so that the reduction of the electrolyte solution during overcharge becomes remarkable. Therefore, in a general lead-acid battery, the PAM/NAM ratio is often set to about 1.5.
When the PAM/NAM ratio is controlled to 1.4 or less, sulfation in the negative electrode plate can be reduced. However, when the PAM/NAM ratio is 1.4 or less, the positive electrode is regulated, and the utilization factor of the positive electrode material increases, so that softening of the positive electrode material easily proceeds. When the PAM/NAM ratio is 1.4 or less, gas generation during charge is remarkable as described above, so that the softened positive electrode material falls off due to the generated gas, and the lead-acid battery comes to the end of its life. Therefore, actually, even when the PAM/NAM ratio is controlled to 1.4 or less, the PSOC life performance is not improved so much.
In view of the above, a lead-acid battery according to one aspect of the present invention includes at least one cell including an element and an electrolyte solution. The element includes a negative electrode plate, a positive electrode plate, and a separator interposed between the negative electrode plate and the positive electrode plate. The negative electrode plate includes a negative electrode material. The negative electrode material contains a polymer compound having a peak in a range of 3.2 ppm or more and 3.8 ppm or less in a chemical shift of $^1$H-NMR spectrum measured using deuterated chloroform as a solvent. The positive electrode plate includes a positive electrode material. A mass ratio of the positive electrode material to the negative electrode material (PAM/NAM ratio) is 1 or more and 1.4 or less.
Note that the peak appearing in the chemical shift range of 3.2 ppm or more and 3.8 ppm or less in the $^1$H-NMR spectrum is derived from an oxy $C_{2-4}$ alkylene unit.

A lead-acid battery according to another aspect of the present invention includes at least one cell including an element and an electrolyte solution. The element includes a negative electrode plate, a positive electrode plate, and a separator interposed between the negative electrode plate and the positive electrode plate. The negative electrode plate includes a negative electrode material. The negative electrode material contains a polymer compound having a repeating structure of oxy $C_{2-4}$ alkylene units. The positive electrode plate includes a positive electrode material. A mass ratio of the positive electrode material to the negative electrode material (PAM/NAM ratio) is 1 or more and 1.4 or less.

In the lead-acid battery according to one aspect and another aspect of the present invention, the PAM/NAM ratio is controlled to 1 or more and 1.4 or less, and the negative electrode material contains the polymer compound as described above. With such a configuration, high PSOC life performance can be secured while reducing the reduction amount of the electrolyte solution. The reduction in the reduction amount of the electrolyte solution is advantageous for prolonging the life of the lead-acid battery.

In the lead-acid battery according to one aspect and another aspect of the present invention, it is considered that the high PSOC life performance can be secured while reducing the reduction amount of the electrolyte solution for the following reasons. First, since the polymer compound easily has a linear structure due to the repeating structure of oxy $C_{2-4}$ alkylene units, the surface of lead in the negative electrode material is thinly and widely covered with the polymer compound. In a wide region of the lead surface, the surface of lead is covered with the polymer compound, so that a hydrogen overvoltage increases, and a side reaction in which hydrogen gas is generated during charge and overcharge hardly occurs. As a result, the reduction amount of the electrolyte solution can be reduced. In addition, when the PAM/NAM ratio is 1 or more and 1.4 or less, softening of the positive electrode material easily proceeds by charge-discharge, but the generation of hydrogen gas is restricted by action of the polymer compound, so that falling off of the positive electrode material is suppressed. Thus, high PSOC life performance can be secured. Since even a very small amount of the polymer compound can provide the effect of reducing the reduction of the electrolyte solution, it is considered that when the polymer compound is contained in the negative electrode material, the polymer compound can be present near lead, whereby a high adsorption action of the oxy $C_{2-4}$ alkylene unit on lead is exerted. When the PAM/NAM ratio is < 1, it is difficult to obtain the effect of increasing the hydrogen overvoltage by the polymer compound in the entire negative electrode plate, so that it is difficult to reduce the reduction amount of the electrolyte solution.

The effect of the polymer compound as described above is exhibited by covering the surface of lead with the polymer compound. Therefore, it is important that the polymer compound is allowed to be present near lead, and as a result, the effect of the polymer compound can be effectively exhibited. Thus, it is important that the negative electrode material contains the polymer compound regardless of whether or not a component of the lead-acid battery other than the negative electrode material contains the polymer compound.

When the PAM/NAM ratio is > 1.4, the negative electrode material contains the polymer compound, so that the effect of reducing the reduction of the electrolyte solution can be obtained, but the PSOC life performance is deteriorated as compared with the case where the negative electrode material does not contain the polymer compound. When the negative electrode material contains a polymer compound, the polymer compound is likely to adhere to the surface of lead sulfate generated during discharge, so that dissolution of lead sulfate during charge and transfer of electrons during reduction from lead ions to lead tend to be inhibited. When the PAM/NAM ratio is > 1.4, the negative electrode is regulated, and the life is ended due to sulfation. Therefore, it is considered that the inhibitory effect by the polymer compound adhering to the surface of lead sulfate becomes apparent, and the PSOC life performance is deteriorated as described above. Thus, behavior of the PSOC life performance by the polymer compound is completely different between the PAM/NAM ratio $\leq$ 1.4 and the PAM/NAM ratio > 1.4.

From the viewpoint of further reducing the reduction amount of the electrolyte solution, the PAM/NAM ratio is preferably 1.1 or more.

Since the polymer compound can thinly cover the lead surface while having high adsorptivity to lead, even if the content of the polymer compound in the negative electrode material is small, the generation of hydrogen gas can be reduced. Thus, excellent PSOC life performance can be secured while reducing the reduction amount of the electrolyte solution. From the viewpoint of securing a higher PSOC life performance, the content of the polymer compound in the negative electrode material is preferably 600 ppm or less on a mass basis. From the viewpoint of further reducing the reduction amount of the electrolyte solution, the content of the polymer compound in the negative electrode material is preferably 10 ppm or more.

In the lead-acid battery according to one aspect of the present invention, the polymer compound may contain an oxygen atom bonded to a terminal group and a $-CH_2-$ group and/or a $-CH<$ group bonded to the oxygen atom. In the $^1$H-NMR spectrum, a ratio of an integrated value of the peak of 3.2 ppm to 3.8 ppm to the sum of the integrated value of the peak of 3.2 ppm to 3.8 ppm, an integrated value of peaks of hydrogen atoms of the $-CH_2-$ group bonded to the oxygen atom, and an integrated value of a peak of a hydrogen atom of the $-CH<$ group bonded to the oxygen atom is preferably 85% or more. Such polymer compounds contain many oxy $C_{2-4}$ alkylene units in the molecule. Therefore, it is considered that the polymer compound becomes easy to adsorb to lead, and it becomes easy to thinly cover the lead surface by further easily taking a linear structure. Thus, the reduction amount of the electrolyte solution can be kept low, and higher PSOC life performance can be secured.

In the $^1$H-NMR spectrum, the polymer compound having a peak in the chemical shift range of 3.2 ppm to 3.8 ppm preferably contains a repeating structure of oxy $C_{2-4}$ alkylene units. When the polymer compound containing a repeating structure of oxy $C_{2-4}$ alkylene units is used, it is considered that the polymer compound becomes easier to adsorb to lead, and it becomes easy to thinly cover the lead surface by easily taking a linear structure. Thus, the reduction amount of the electrolyte solution can be kept low, and higher PSOC life performance can be secured.

The polymer compound may contain at least one selected from the group consisting of a hydroxy compound having a repeating structure of oxy $C_{2-4}$ alkylene units, etherified products of the hydroxy compound, and esterified products of the hydroxy compound. Here, the hydroxy compound is at least one selected from the group consisting of poly $C_{2-4}$ alkylene glycols, copolymers containing a repeating structure of oxy $C_{2-4}$ alkylene, and poly $C_{2-4}$ alkylene oxide adducts of polyols. When such a polymer compound is used, higher PSOC life performance can be secured. In addition, the reduction amount of the electrolyte solution can be kept low.

The polymer compound may contain a repeating structure of oxypropylene units ($-O-CH(-CH_3)-CH_2-$). Such a polymer compound is suppressed from adhering thickly to the surface of lead while having high adsorptivity to lead, and is considered to have an excellent balance therebetween. Thus, the reduction amount of the electrolyte solution can be kept low, and it is advantageous in securing higher PSOC life performance.

The polymer compound may have one or more hydrophobic groups, and at least one of the hydrophobic groups may be a long-chain aliphatic hydrocarbon group having 8 or more carbon atoms. By the action of such a hydrophobic group, excessive coating of lead sulfate with the polymer compound is suppressed, and high charge acceptance can be secured, so that a higher PSOC life can be obtained. The polymer compound preferably contains a repeating structure of oxyethylene units. When the polymer compound contains a repeating structure of oxyethylene units having high hydrophilicity, the polymer compound can be selectively adsorbed to lead. A balance between the hydrophobic group and the hydrophilic group can more effectively reduce the reduction amount of the electrolyte solution, and higher charge acceptance can be obtained, so that the PSOC life performance can be further improved.

In the lead-acid battery, it is sufficient that the polymer compound can be contained in the negative electrode material, and the source of the polymer compound contained in the negative electrode material is not particularly limited. The polymer compound may be contained in any of the components (for example, a negative electrode plate, a positive electrode plate, an electrolyte solution, and a separator) of the lead-acid battery when preparing the lead-acid battery. The polymer compound may be contained in one constituent element, or may be contained in two or more constituent elements (for example, a negative electrode plate and an electrolyte solution).

The lead-acid battery is suitable for use as a flooded-type (vent type) lead-acid battery.

In the present specification, the mass of each of the positive electrode material and the negative electrode material and the content of the polymer compound in the negative electrode material are determined for a positive electrode plate or a negative electrode plate taken out from a lead-acid battery in a fully charged state.

(Description of terminology)

(Electrode material)

The negative electrode material and a positive electrode material are each usually held by the current collector. The electrode material is a portion excluding the current collector from the electrode plate. A member such as a mat or a pasting paper may be stuck to the electrode plate. Such a member (also referred to as a sticking member) is used integrally with the electrode plate and is thus included in the plate. When the electrode plate includes the sticking member (such as a mat or a pasting paper), the electrode material is a portion excluding the current collector and the sticking member from the electrode plate.

In the positive electrode plate, a clad-type positive electrode plate includes a plurality of porous tubes, a spine inserted into each tube, a current collecting portion that connects the plurality of spines, a positive electrode material with which a spine inserted tube is filled, and a spine protector that connects the plurality of tubes. In the clad-type positive electrode plate, the positive electrode material is a portion excluding the tube, the spine, the current collecting portion, and the spine protector from the electrode plate. In the clad-type positive electrode plate, the spine and the current collecting portion may be collectively referred to as a positive current collector.

(PAM/NAM ratio)

The PAM/NAM ratio is a ratio of the total mass of positive electrode materials contained in one cell of the lead-acid battery to the total mass of negative electrode materials contained in one cell. When the lead-acid battery includes two or more cells, each of the total masses of the positive electrode material and the negative electrode material is an average value of the total masses obtained for the two cells. When the lead-acid battery includes three or more cells, each average value is obtained from one cell located at the end of the lead-acid battery and one cell located near the center.

(Polymer compound)

The polymer compound satisfies at least one of the following conditions (i) and (ii).

Condition (i)

The polymer compound has a peak in a range of 3.2 ppm or more and 3.8 ppm or less in a chemical shift of $^1$H-NMR spectrum measured using deuterated chloroform as a solvent.

Condition (ii)

The polymer compound contains a repeating structure of oxy $C_{2-4}$ alkylene units.

In (i) above, the peak in the range of 3.2 ppm or more and 3.8 ppm or less is derived from the oxy $C_{2-4}$ alkylene unit. That is, the polymer compound satisfying the condition (ii) is also the polymer compound satisfying the condition (i). The polymer compound satisfying (i) above may contain a repeating structure of monomer units other than the oxy $C_{2-4}$ alkylene unit, and may have a certain level of molecular weight. The number average molecular weight (Mn) of the polymer compound satisfying (i) or (ii) above may be, for example, 300 or more.

(Oxy $C_{2-4}$ alkylene unit)

The oxy $C_{2-4}$ alkylene unit is a unit represented by -Q-R$^1$- (R$^1$ represents a $C_{2-4}$ alkylene group.).

(Number average molecular weight)

In the present specification, the number average molecular weight (Mn) is determined by gel permeation chromatography (GPC). A standard substance used for determining Mn is polyethylene glycol.

(Fully charged state)

The fully charged state of the flooded-type lead-acid battery is defined by the definition of JIS D 5301: 2019. More specifically, the following state is defined as the fully charged state: the lead-acid battery is charged in a water bath at 25°C $\pm$ 2°C at a current (A) 0.2 times as large as a numerical value (numerical value whose unit is Ah) described as a rated capacity until a terminal voltage (V) during charge measured every 15 minutes or an electrolyte solution density subjected to temperature correction to 20°C exhibits a constant value at three significant digits continuously three times.

The lead-acid battery in the full charge state refers to a lead-acid battery obtained by fully charging a formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

(Up-down direction of lead-acid battery or components of lead-acid battery)

In the present specification, the up-down direction of the lead-acid battery or components (such as electrode plate, container, and separator) of the lead-acid battery means the up-down direction of the lead-acid battery in the vertical direction when the lead-acid battery is in use. Each of the positive electrode plate and the negative electrode plate includes a lug part for connecting to an external terminal. In many lead-acid batteries, the lug part is usually provided above the electrode plate so as to protrude upward.

Hereinafter, the lead-acid battery according to an embodiment of the present invention will be described for each of the main constituent elements, but the present invention is not limited to the following embodiment.

[Lead-acid battery]

(Negative electrode plate)

The negative electrode plate usually includes a negative current collector in addition to a negative electrode material.

(Negative current collector)

The negative current collector may be formed by casting lead (Pb) or a lead alloy, or may be formed by processing a lead sheet or a lead alloy sheet. Examples of the processing method include expanding processing or punching processing. It is preferable to use the grid-like current collector as the negative current collector because the negative electrode material is easy to be supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug part of the negative current collector. The surface layer of the lug part may contain Sn or a Sn alloy.

(Negative electrode material)

The negative electrode material contains the above polymer compound. The negative electrode material further contains a negative active material (specifically, lead or lead sulfate) that exhibits a capacity through a redox reaction. The negative electrode material may contain at least one selected from the group consisting of an organic expander, a carbonaceous material, and other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

(Polymer compound)

The polymer compound has a peak in a range of 3.2 ppm or more and 3.8 ppm or less in a chemical shift of $^1$H-NMR spectrum. Such polymer compounds have oxy $C_{2-4}$ alkylene units. Examples of the oxy $C_{2-4}$ alkylene unit include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound may have one kind or two or more kinds of such oxy $C_{2-4}$ alkylene units.

The polymer compound preferably contains a repeating structure of oxy $C_{2-4}$ alkylene units. The repeating structure may contain one kind of oxy $C_{2-4}$ alkylene unit, or may contain two or more kinds of oxy $C_{2-4}$ alkylene units. The polymer compound may contain one kind of the repeating structure or two or more kinds of the repeating structures.

The polymer compound having a repeating structure of oxy $C_{2-4}$ alkylene units also includes the polymer compound classified as a surfactant (more specifically, a nonionic surfactant).

Examples of the polymer compound include hydroxy compounds having a repeating structure of oxy $C_{2-4}$ alkylene units (poly $C_{2-4}$ alkylene glycols, copolymers containing a repeating structure of oxy $C_{2-4}$ alkylene, poly $C_{2-4}$ alkylene oxide adducts of polyols, and the like), etherified product or esterified product of these hydroxy compounds, and the like.

Examples of the copolymer include copolymers containing different oxy $C_{2-4}$ alkylene units. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (for example, polyhydroxycyclohexane, polyhydroxynorbornane), and the like are preferable, and among them, aliphatic polyols are preferable. Examples of the aliphatic polyol include aliphatic diols and polyols of triol or higher (for example, glycerin, trimethylolpropane, pentaerythritol, sugar, or sugar alcohol). Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar or sugar alcohol include sucrose, erythritol, xylitol, mannitol, and sorbitol. The sugar or sugar alcohol may have either a chain structure or a cyclic structure. In the polyalkylene oxide adduct of the polyol, the alkylene oxide corresponds to an oxy $C_{2-4}$ alkylene unit of the polymer compound and contains at least $C_{2-4}$ alkylene oxide. From the viewpoint that the polymer compound easily take a linear structure, the polyol is preferably a diol.

The etherified product has an $-OR^2$ group obtained by etherifying - OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^2$ is an organic group.). Among terminals of the polymer compound, some terminals may be etherified, or all terminals may be etherified. For example, one terminal of a main chain of the linear polymer compound may be an -OH group, and the other terminal may be an

-OR$^2$ group.

The esterified product has an -O-C(=O)-R$^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy C$_{2-4}$ alkylene units (wherein R$^3$ is an organic group.). Among terminals of the polymer compound, some terminals may be esterified, or all terminals may be esterified. For example, one terminal of a main chain of the linear polymer compound may be an -OH group, and the other terminal may be an -O-C(=O)-R$^3$ group.

Examples of each of the organic groups R$^2$ and R$^3$ include a hydrocarbon group. The hydrocarbon group may have a substituent (for example, a hydroxy group, an alkoxy group, and/or a carboxy group). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, an alkynyl group) as a substituent. The number of carbon atoms of the aliphatic hydrocarbon group as a substituent may be, for example, 1 to 30, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, a bisaryl group, and the like. Examples of the aryl group include a phenyl group, and a naphthyl group. Examples of the bisaryl group include monovalent groups corresponding to bisarene. Examples of the bisarene include biphenyl and bisarylalkanes (for example, bis C$_{6-10}$ aryl C$_{1-4}$ alkanes (2,2-bisphenyl-propane)).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (cyclopentyl group, cyclohexyl group, cyclooctyl group, and the like), cycloalkenyl groups (cyclohexenyl group, cyclooctenyl group, and the like). The alicyclic hydrocarbon group also includes hydrogenated products of the aromatic hydrocarbon groups.

Among the hydrocarbon groups, an aliphatic hydrocarbon group is preferable from the viewpoint that the polymer compound easily adheres thinly to the lead surface. The aliphatic hydrocarbon group may be saturated or unsaturated. Examples of the aliphatic hydrocarbon group include an alkyl group, an alkenyl group, an alkynyl group, a dienyl group having two carbon-carbon double bonds, trienyl group having three carbon-carbon double bonds, and the like. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, 3 or more for a dienyl group, and 4 or more for a trienyl group, depending on the type of the aliphatic hydrocarbon group. Among them, an alkyl group and an alkenyl group are preferable from the viewpoint that the polymer compound easily adheres thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-decyl, i-decyl, undecyl, lauryl (dodecyl), tridecyl, myristyl, pentadecyl, cetyl, heptadecyl, stearyl, icosyl, henicosyl, and behenyl.

Specific examples of the alkenyl group include vinyl, 1-propenyl, allyl, cis-9-heptadecen-1-yl, palmitoleyl, and oleyl. An alkenyl group may be, for example, a C$_{2-30}$ alkenyl group or a C$_{2-26}$ alkenyl group, a C$_{2-22}$ alkenyl group or a C$_{2-20}$ alkenyl group, or a C$_{10-20}$ alkenyl group.

When at least one selected from the group consisting of an etherified product of a hydroxy compound having a repeating structure of oxy C$_{2-4}$ alkylene units and an esterified product of a hydroxy compound having a repeating structure of oxy C$_{2-4}$ alkylene units are used among the polymer compounds, it is preferable because the PSOC life performance can be further enhanced. Even when these polymer compounds are used, the reduction amount of the electrolyte solution can be reduced. Among the polymer compounds as described above, polymer compounds having a repeating structure of oxypropylene units, polymer compounds having a repeating structure of oxyethylene units, or the like are preferable.

The polymer compound may have one or more hydrophobic groups. Examples of the hydrophobic group include an aromatic hydrocarbon group, an alicyclic hydrocarbon group, and a long-chain aliphatic hydrocarbon group among the above-mentioned hydrocarbon groups. Examples of the long-chain aliphatic hydrocarbon group include aliphatic hydrocarbon groups having 8 or more carbon atoms among the above-mentioned aliphatic hydrocarbon groups (such as alkyl groups and alkenyl groups). The number of carbon atoms in the aliphatic hydrocarbon group is preferably 12 or more, and more preferably 16 or more. Among them, the polymer compound having a long-chain aliphatic hydrocarbon group is preferable because it hardly causes excessive adsorption to lead and the PSOC life performance can be further improved by suppressing a decrease in charge acceptance. The polymer compound may be a polymer compound in which at least one of the hydrophobic groups is a long-chain aliphatic hydrocarbon group. The number of carbon atoms of the long-chain aliphatic hydrocarbon group may be 30 or less, 26 or less, or 22 or less.

The number of carbon atoms of the long-chain aliphatic hydrocarbon group may be 8 or more (or 12 or more) and 30 or less, 8 or more (or 12 or more) and 26 or less, 8 or more (or 12 or more) and 22 or less, 10 or more and 30 or less (or 26 or less), or 10 or more and 22 or less.

Among the polymer compounds, a polymer compound having a hydrophilic group and a hydrophobic group corresponds to a nonionic surfactant. The repeating structure of polyoxyethylene units exhibits high hydrophilicity and can be a hydrophilic group in the nonionic surfactant. Thus, the polymer compound having a hydrophobic group preferably contains a repeating structure of oxyethylene units. The polymer compound as described above can suppress excessive coverage of the surface of lead while being selectively adsorbed to lead by a balance between hydrophobicity and high hydrophilicity due to the repeating structure of oxyethylene units, and thus, higher PSOC life performance can be secured while reducing the reduction amount of the electrolyte solution. The polymer compound as described above can ensure high adsorptivity to lead even with a relatively low molecular weight (for example, Mn is 1,000 or less.).

Among the polymer compounds, a polyoxypropylene-polyoxyethylene block copolymer, an etherified product of a hydroxy compound having a repeating structure of oxyethylene units, an esterified product of a hydroxy compound having a repeating structure of oxyethylene units, and the like correspond to a nonionic surfactant.

In a polyoxypropylene-polyoxyethylene block copolymer or the like, the repeating structure of oxyethylene units corresponds to a hydrophilic group, and the repeating structure of oxypropylene units corresponds to a hydrophobic group. Such a copolymer is also included in the polymer compound having a hydrophobic group.

Examples of the polymer compound having a hydrophobic group and containing a repeating structure of oxyethylene units include etherified products (such as alkyl ethers) of polyethylene glycol, esterified products (such as carboxylic acid esters) of polyethylene glycol, etherified products (such as alkyl ethers) of the polyethylene oxide adduct of the polyol, esterified products of the polyethylene oxide adduct (such as carboxylic acid esters) of the polyol (such as polyol of triol or higher), and the like. Specific examples of the polymer compound as described above include polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether, and polyoxyethylene cetyl ether. However, the polymer compound is not limited thereto. Among them, use of an esterified product of polyethylene glycol, an esterified product of a polyethylene oxide adduct of the polyol, and the like is preferable because higher PSOC life performance can be secured and the reduction amount of the electrolyte solution can be remarkably reduced.

For the polymer compound classified as a surfactant, HLB of the polymer compound is preferably 4 or more, and more preferably 4.3 or more from the viewpoint of further easily reducing the reduction amount of the electrolyte solution. From the viewpoint of easily securing higher PSOC life performance, the HLB of the polymer compound is preferably 18 or less, more preferably 10 or less or 9 or less, and still more preferably 8.5 or less.

The HLB of the polymer compound may be 4 or more (or 4.3 or more) and 18 or less, or 4 or more (or 4.3 or more) and 10 or less. The HLB of the polymer compound is preferably 4 or more (or 4.3 or more) and 9 or less, or 4 or more (or 4.3 or more) and 8.5 or less from the viewpoint of achieving an excellent balance between suppression of the reduction of the electrolyte solution and improvement in the PSOC life performance.

HLB stands for Hydrophile Lipophile Balance, and is a numerical value representing the balance between hydrophobicity and hydrophilicity of a nonionic surfactant.

It is also preferable when the repeating structure of oxy $C_{2-4}$ alkylene contains at least a repeating structure of oxypropylene units. In this case, although the charge acceptance tends to be lower than that in the case of the repeating structure of oxyethylene units, even in this case, high PSOC life performance can be secured while the reduction amount of the electrolyte solution is kept low. The polymer compound containing the oxypropylene unit has peaks derived from -CH< and -CH$_2$- of the oxypropylene unit in a range of 3.2 ppm to 3.8 ppm in a chemical shift of $^1$H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of $^1$H-NMR spectrum. The peak in the range of 3.2 ppm or more and 3.42 ppm or less is derived from -CH$_2$-, and the peak in the range of more than 3.42 ppm and 3.8 ppm or less is derived from -CH< and -CH$_2$-.

Examples of the polymer compound containing at least a repeating structure of oxypropylene units include polypropylene glycol, a copolymer containing a repeating structure of oxypropylene units, a polypropylene oxide adduct of the polyol, etherified or esterified products thereof, and the like. Examples of the copolymer include an oxypropylene-oxyalkylene copolymer (provided that oxyalkylene is $C_{2-4}$ alkylene other than oxypropylene) and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be referred to as a polyoxypropylene-polyoxyalkylene copolymer (for example, a polyoxypropylene-polyoxyethylene copolymer). The oxypropylene-oxyalkylene copolymer may be a block copolymer (for example, a polyoxypropylene-polyoxyethylene block copolymer). Examples of the etherified product include polypropylene glycol alkyl ether, alkyl ether of an oxypropylene-oxyalkylene copolymer (such as alkyl ether of polyoxypropylene-polyoxyethylene copolymer), and the like. Examples of the esterified product include polypropylene glycol ester of carboxylic acid, carboxylic acid ester of an oxypropylene-oxyalkylene copolymer (such as carboxylic acid ester of polyoxypropylene-polyoxyethylene copolymer), and the like.

Examples of the polymer compound containing at least a repeating structure of oxypropylene units include polypropylene glycol, a polyoxypropylene-polyoxyethylene copolymer (such as a polyoxypropylene-polyoxyethylene block copolymer), a polypropylene glycol alkyl ether (such as alkyl ether (such as methyl ether, ethyl ether, or butyl ether) in which the $R^2$ is an alkyl having 10 or less carbon atoms (or 8 or less or 6 or less carbon atoms)), a polyoxyethylene-polyoxypropylene alkyl ether (such as alkyl ether (such as butyl ether or hydroxyhexyl ether) in which the R2 is an alkyl having 10 or less carbon atoms (or 8 or less or 6 or less carbon atoms)), a polypropylene glycol carboxylate (such as polypropylene glycol carboxylate (such as polypropylene glycol acetate) in which the $R^3$ is an alkyl having 10 or less carbon atoms (or 8 or less or 6 or less carbon atoms)), and a polypropylene oxide adduct of polyol of triol or higher (such as polypropylene oxide adduct of glycerin). However, the polymer compound is not limited thereto.

It is preferable that the polymer compound contains a large amount of oxy $C_{2-4}$ alkylene units from the viewpoint of enhancing adsorptivity of the polymer compound to lead and easily taking a linear structure of the polymer compound. Such a polymer compound includes, for example, an oxygen atom bonded to a terminal group and a $-CH_2-$ group and/or a -CH< group bonded to the oxygen atom. In the $^1$H-NMR spectrum of the polymer compound, the ratio of the integrated value of the peak of 3.2 ppm to 3.8 ppm to the sum of the integrated value of this peak, the integrated value of the peak of the hydrogen atoms of the $-CH_2-$ group, and the integrated value of the peak of the hydrogen atom of the -CH< group increases. This ratio is, for example, 50% or more, and may be 80% or more. From the viewpoint of further reducing the reduction amount of the electrolyte solution and easily securing higher PSOC life performance, the above ratio is preferably 85% or more, and more preferably 90% or more. For example, when the polymer compound has an -OH group at a terminal and also has a $-CH_2-$group and/or a -CH< group bonded to an oxygen atom of the -OH group, in the $^1$H-NMR spectrum, the peaks of the hydrogen atoms of each of the $-CH_2-$group and the -CH< group have a chemical shift in a range of more than 3.8 ppm and 4.0 ppm or less.

The negative electrode material may contain one kind or two or more kinds of polymer compounds.

The polymer compound may contain, for example, a compound having Mn of 5 million or less, 1 million or less or 100,000 or less, or 20,000 or less. From the viewpoint of securing higher PSOC life performance, the polymer compound preferably contains a compound having Mn of 10,000 or less, and may contain a compound having Mn of 5,000 or less or 3,000 or less, or 2,500 or less or 2,000 or less. Mn of such a compound may be 300 or more or 400 or more, or 500 or more. As the polymer compound, two or more compounds having different Mn may be used. That is, the polymer compound may have a plurality of peaks of Mn in the distribution of the molecular weight.

The Mn of the compound may be 300 or more and 5 million or less (or 1 million or less), 400 or more and 5 million or less (or 1 million or less), 500 or more and 5 million or less (or 1 million or less), 300 or more and 100,000 or less (or 20,000 or less), 400 or more and 100,000 or less (or 20,000 or less), 500 or more and 100,000 or less (or 20,000 or less), 300 or more and 10,000 or less (or 5,000 or less), 400 or more and 10,000 or less (or 5,000 or less), 500 or more and 10,000 or less (or 5,000 or less), 300 or more and 3,000 or less (or 2,500 or less), 400 or more and 3,000 or less (or 2,500 or less), 500 or more and 3,000 or less (or 2,500 or less), 300 or more and (or 400 or more) 2,000 or less, or 500 or more and 2,000 or less.

The content of the polymer compound in the negative electrode material is, for example, 8 ppm or more on a mass basis. From the viewpoint of further reducing the reduction amount of the electrolyte solution, the content of the polymer compound in the negative electrode material is preferably 10 ppm or more, preferably 20 ppm or more, and more preferably 30 ppm or more on a mass basis. The content of the polymer compound in the negative electrode material is, for example, 1,000 ppm or less, may be less than 1,000 ppm, or may be 700 ppm or less on a mass basis. From the viewpoint of easily securing higher PSOC life performance, the content of the polymer compound in the negative electrode material is preferably 600 ppm or less, more preferably 550 ppm or less, and still more preferably 500 ppm or less or 400 ppm or less on a mass basis.

The content (mass basis) of the polymer compound in the negative electrode material may be 8 ppm (or 10 ppm or more) and 1,000 ppm or less, 8 ppm (or 10 ppm or more) and less than 1,000 ppm, 8 ppm (or 10 ppm or more) and 700 ppm or less, 8 ppm (or 10 ppm or more) and 600 ppm or less, 8 ppm (or 10 ppm or more) and 550 ppm or less, 8 ppm (or 10 ppm or more) and 500 ppm or less, 8 ppm (or 10 ppm or more) and 400 ppm or less, 20 ppm or more (or 30 ppm or more) and 1,000 ppm or less, 20 ppm or more (or 30 ppm or more) and less than 1,000 ppm, 20 ppm or more (or 30 ppm or more) and 700 ppm or less, 20 ppm or more (or 30 ppm or more) and 600 ppm or less, 20 ppm or more (or 30 ppm or more) and 550 ppm or less, 20 ppm or more (or 30 ppm or more) and 500 ppm or less, or 20 ppm or more (or 30 ppm or more) and 400 ppm or less.

(Organic expander)

The organic expander is an organic compound among compounds having a function of suppressing shrinkage of lead as a negative active material when charge-discharge of the lead-acid battery is repeated. The organic expanders are generally roughly classified into lignin compounds and synthetic organic expanders. It can also be said that the synthetic organic expander is an organic expander other than lignin compounds. Examples of the organic expander contained in the negative electrode material include a lignin compound, a synthetic organic expander, and the like. The negative electrode material may contain one kind or two or more kinds of organic expanders.

Examples of the lignin compounds include lignin, lignin derivatives, and the like. Examples of the lignin derivative include lignin sulfonic acid or salts thereof (such as alkali metal salts (sodium salts and the like)), and the like.

The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt.

At least a lignin compound may be used as the organic expander. When a lignin compound is used, charge acceptance tends to be lower than that when a synthetic organic expander is used. However, since the negative electrode material contains a specific polymer compound, even when a lignin compound is used as the organic expander, a decrease in charge acceptance is suppressed, and high PSOC life performance can be secured.

As the organic expander, the case of using a condensate containing at least a unit of an aromatic compound is also preferable. Examples of such a condensate include a condensate of an aromatic compound with an aldehyde compound (such as at least one selected from the group consisting of aldehydes (for example, formaldehyde) and condensates thereof). The organic expander may contain a unit of one kind of an aromatic compound or a unit of two or more kinds of aromatic compounds.

Note that the unit of an aromatic compound refers to a unit derived from an aromatic compound incorporated in a condensate.

Examples of the aromatic ring of the aromatic compound include a benzene ring, a naphthalene ring, and the like. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (biphenyl, bisphenylalkane, bisphenylsulfone, and the like). Examples of the aromatic compound include compounds having the aromatic ring and at least one selected from the group consisting of a hydroxy group and an amino group. The hydroxy group or the amino group may be directly bonded to the aromatic ring, or may be bonded as an alkyl chain having a hydroxy group or an amino group. Note that the hydroxy group also includes salts of hydroxy group (-OMe). The amino group also includes salts of an amino group (specifically, salts with anions). Examples of Me include alkali metals (Li, K, Na, and the like), Group 2 metals of the periodic table (Ca, Mg, and the like), and the like.

As the aromatic compound, bisarene compounds [bisphenol compounds, hydroxybiphenyl compounds, bisarene compounds having an amino group (bisarylalkane compounds having an amino group, bisarylsulfone compounds having an amino group, biphenyl compounds having an amino group, and the like), hydroxyarene compounds (hydroxynaphthalene compounds, phenol compounds, and the like), aminoarene compounds (aminonaphthalene compounds, aniline compounds (aminobenzenesulfonic acid, alkylaminobenzenesulfonic acid, and the like), and the like], and the like] are preferable. The aromatic compound may further have a substituent. The organic expander may contain one or more or a plurality of residues of these compounds. As the bisphenol compound, bisphenol A, bisphenol S, bisphenol F, and the like are preferable.

The condensate preferably contains a unit of an aromatic compound having at least a sulfur-containing group. Among them, when a condensate containing at least a unit of a bisphenol compound having a sulfur-containing group is used, high charge acceptance is obtained, which is advantageous in securing higher PSOC life performance. From the viewpoint of further reducing the reduction amount of the electrolyte solution, it is also preferable to use a condensate of a naphthalene compound having a sulfur-containing group and having at least one selected from the group consisting of a hydroxy group and an amino group with an aldehyde compound.

The sulfur-containing group may be directly bonded to the aromatic ring contained in the compound, and for example, may be bonded to the aromatic ring as an alkyl chain having a sulfur-containing group. The sulfur-containing group is not particularly limited, and examples thereof include a sulfonyl group, a sulfonic acid group or a salt thereof.

In addition, as the organic expander, for example, at least a condensate containing at least one selected from the group consisting of units of the bisarene compound and units of a monocyclic aromatic compound (hydroxyarene compound and/or aminoarene compound, or the like) may be used. The organic expander may contain at least a condensate containing a unit of a bisarene compound and a unit of a monocyclic aromatic compound (among them, hydroxyarene compound). Examples of such a condensate include a condensate of a bisarene compound and a monocyclic aromatic compound with an aldehyde compound. As the hydroxyarene compound, a phenol sulfonic acid compound (phenol sulfonic acid, a substituted product thereof, or the like) is preferable. As the aminoarene compound, aminobenzenesulfonic acid, alkylaminobenzenesulfonic acid, and the like are preferable. As the monocyclic aromatic compound, a hydroxyarene compound is preferable.

The content of the organic expander contained in the negative electrode material is, for example, 0.005% by mass or more and may be 0.01% by mass or more. When the content of the organic expander is in such a range, a discharge reaction is easily performed smoothly. The content of the organic expander is, for example, 1.0% by mass or less and may be 0.5% by mass or less. The content of the organic expander is preferably 0.3% by mass or less, and more preferably 0.25% by mass or less, from the viewpoint of suppressing a decrease in charge acceptance and easily securing higher PSOC life performance.

The content of the organic expander contained in the negative electrode material may be 0.005% by mass or more (or 0.01% by mass or more) and 1.0% by mass or less, 0.005% by mass or more (or 0.01% by mass or more) and 0.5% by mass or less, 0.005% by mass or more (or 0.01% by mass or more) and 0.3% by mass or less, or 0.005% by mass or more (or 0.01% by mass or more) and 0.25% by mass or less.

(Carbonaceous material)

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbonaceous material including a graphite-type crystal structure and may be either artificial graphite or natural graphite. The negative electrode material may contain one kind or two or more kinds of carbonaceous materials.

The content of the carbonaceous material in the negative electrode material is, for example, 0.05% by mass or more and may be 0.10% by mass or more. The content of the carbonaceous material is, for example, 5% by mass or less and may be 3% by mass or less.

The content of the carbonaceous material in the negative electrode material may be 0.05% by mass or more and 5% by mass or less, 0.05% by mass or more and 3% by mass or less, 0.10% by mass or more and 5% by mass or less, or 0.10% by mass or more and 3% by mass or less.

(Barium sulfate)

The content of barium sulfate in the negative electrode material is, for example, 0.05% by mass or more and may be 0.10% by mass or more. The content of barium sulfate in the negative electrode material is, for example, 3% by mass or less and may be 2% by mass or less.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

(Analysis of negative electrode material or constituent components)

Hereinafter, a method of analyzing the negative electrode material or constituent components thereof will be described.

(1) Quantification of negative electrode material

A lead-acid battery in a fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at $60 \pm 5°C$ in a reduced pressure environment for about six hours. After drying, when the sticking member is included in the negative electrode plate, the sticking member is removed by peeling. The mass of the dried product (negative electrode plate) is measured. Next, the negative electrode material is scraped and separated from the negative current collector to obtain a sample (hereinafter, referred to as sample A). The sample A is ground as necessary and subjected to analysis of constituent components of the negative electrode material.

The negative electrode material is dropped from the negative current collector, and the negative current collector is rubbed with a brush or the like to remove the negative electrode material adhering to the negative current collector. The resulting negative current collector is washed with water and dried, and then the mass of the negative current collector is measured. The mass of the negative electrode material is obtained by subtracting the mass of the negative current collector from the mass of the negative electrode plate. The mass of the negative electrode material in the cell is obtained by summing the masses of the negative electrode materials for all the negative electrode plates in the cell.

(2) Analysis of polymer compound

(2-1) Qualitative analysis of polymer compound

(a) Analysis of oxy $C_{2-4}$ alkylene unit

The pulverized sample A is used. 150.0 $\pm$0.1 mL of chloroform is added to 100.0 $\pm$ 0.1 g of the sample A, and the mixture is stirred at 20 $\pm$ 5°C for 16 hours to extract the polymer compound. Thereafter, the solid content is removed by filtration. For a chloroform solution in which the polymer compound obtained by the extraction is dissolved or the polymer compound obtained by drying the chloroform solution, information is obtained from at least one selected from an infrared spectroscopic spectrum, an ultraviolet-visible absorption spectrum, an NMR spectrum, and LC-MS and pyrolysis GC-MS to specify the polymer compound.

Chloroform is distilled off under reduced pressure from the chloroform solution in which the polymer compound obtained by the extraction is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

> Apparatus: type AL400 nuclear magnetic resonance spectrometer, manufactured by JEOL Ltd.
> Observation frequency: 395.88 MHz
> Pulse width: 6.30 $\mu$s
> Pulse repeating time: 74.1411 seconds
> Number of integrations: 32
> Measurement temperature: room temperature (20 to 35°C)
> Reference: 7.24 ppm
> Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the -$CH_2$- group and the -CH< group bonded to the oxygen atom bonded to the terminal group of the polymer compound, the sum ($V_2$) of integrated values of peaks in the $^1$H-NMR spectrum is determined. Then, from $V_1$ and $V_2$, a ratio of $V_1$ to the sum of $V_1$ and $V_2$ (= $V_1/(V_1 + V_2) \times 100$ (%)) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in the range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(b) Analysis of hydrophobic group in esterified product

When the polymer compound is an esterified product of a hydroxy compound, in (a) above, a predetermined amount of a polymer compound obtained by drying a chloroform solution in which the polymer compound obtained by extraction is dissolved is collected, and an aqueous potassium hydroxide solution is added. As a result, the esterified product is saponified to produce a fatty acid potassium salt and a hydroxy compound. The aqueous water-soluble potassium solution is added until saponification is completed. The fatty acid potassium salt is converted to a fatty acid methyl ester by adding a solution of methanol and boron trifluoride to the resulting mixture and mixing. The resulting mixture is analyzed by pyrolysis GC-MS under the following conditions to identify a hydrophobic group contained in the esterified product.

> Analyzer: high-performance general-purpose gas chromatogram GC-2014 manufactured by Shimadzu Corporation
> Column: DEGS (diethylene glycol succinate ester) 2.1 m
> Oven temperature: 180 to 120°C
> Inlet temperature: 240°C

Detector temperature: 240°C
Carrier gas: He (flow rate: 50 mL/min)
Injection amount: 1 μL to 2 μL

(c) Analysis of hydrophobic group in etherified product

When the polymer compound is an etherified product of a hydroxy compound, in (a) above, a predetermined amount of a polymer compound obtained by drying a chloroform solution in which the polymer compound obtained by extraction is dissolved is collected, and hydrogen iodide is added. This produces an iodide ($R^3I$) corresponding to the organic group of the ether moiety of the polymer compound ($R^3$ described above), and also produces a diiodo $C_{2-4}$ alkane corresponding to the oxy $C_{2-4}$ alkylene unit. The hydrogen iodide is added in an amount sufficient to complete conversion of the etherified product to the iodide product and the diiodo $C_{2-4}$ alkane. The resulting mixture is analyzed by pyrolysis GC-MS under the same conditions as in (b) above to identify a hydrophobic group contained in the etherified product.

(2-2) Quantitative analysis of polymer compound

An appropriate amount of the chloroform soluble component is dissolved in deuterated chloroform together with tetrachloroethane (TCE) of $m_r$ (g) measured with an accuracy of $\pm$ 0.0001 g, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound in the negative electrode material is determined from the following formula.

$$C_n = S_a/S_r \times N_r/N_a \times M_a/M_r \times m_r/m \times 1,000,000$$

(wherein $M_a$ is a molecular weight of a structure showing a peak in the chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.)

Since the reference substance in this analysis is TCE, $N_r$ = 2 and $M_r$ = 168. In addition, m = 100.

For example, when the polymer compound is polypropylene glycol, $M_a$ is 58, and $N_a$ is 3. When the polymer compound is polyethylene glycol, $M_a$ is 44, and $N_a$ is 4. In the case of a copolymer, $N_a$ and $M_a$ are values obtained by averaging $N_a$ values and $M_a$ values of each monomer unit using a molar ratio (mol%) of each monomer unit contained in the repeating structure, respectively.

In the quantitative analysis, the integrated value of the peak in the $^1$H-NMR spectrum is determined using data processing software "ALICE" manufactured by JEOL Ltd.

(2-3) Mn Measurement of polymer compound

Using the chloroform soluble component, GPC measurement of the polymer compound is performed under the following conditions using the following apparatuses. Separately, a calibration curve (standard curve) is prepared from a plot of Mn of the standard substance and elution time. The Mn of the polymer compound is calculated based on the standard curve and the GPC measurement result of the polymer compound. However, the esterified product, the etherified product, and the like may be decomposed in the chloroform soluble component.

Analysis system: 20A system (manufactured by Shimadzu Corporation)
Column: two columns of GPC KF-805L (manufactured by Shodex) connected in series
Column temperature: 30°C $\pm$ 1°C
Mobile phase: tetrahydrofuran
Flow rate: 1 mL/min.
Concentration: 0.20% by mass
Injection amount: 10 μL
Standard substance: polyethylene glycol (Mn = 2,000,000, 200,000, 20,000, 2,000, 200)
Detector: differential refractive index detector (Shodex RI-201H, manufactured by Shodex)

(3) Analysis of organic expander

(3-1) Qualitative analysis of organic expander in negative electrode material

The pulverized sample A is immersed in a 1 mol/L sodium hydroxide aqueous solution to extract the organic expander. Next, insoluble components are removed from the extract by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.
A type of the organic expander is specified by combining information obtained from an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, an NMR spectrum of a solution obtained by dissolving the sample B in a predetermined solvent such as heavy water, pyrolysis GC-MS capable of obtaining information on individual compounds constituting a substance, or the like.

(3-2) Quantitative determination of content of organic expander in negative electrode material

As in (3-1) above, a solution is obtained after insoluble components are removed from the extract by filtration. The ultraviolet-visible absorption spectrum of each obtained solution is measured. The content of the organic expander in the negative electrode material is determined using an intensity of a characteristic peak of each organic expander and a calibration curve prepared in advance.
When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using a separately available organic polymer in which the ultraviolet-visible absorption spectrum, the infrared spectroscopic spectrum, the NMR spectrum, and the like exhibit similar shapes with respect to the organic expander extracted from the negative electrode of the battery.

(4) Quantitative determination of carbonaceous material and barium sulfate

To 10 g of the pulverized sample A, 50 ml of nitric acid having a concentration of 20% by mass is added and heated for about 20 minutes to dissolve the lead component as lead ions. The resulting solution is filtered, and solids such as carbonaceous materials and barium sulfate are filtered off.
The obtained solid is dispersed in water to prepare a dispersion, and components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at $110°C \pm 5°C$. The filtered sample is a mixed sample of the carbonaceous material and barium sulfate. A mass ($M_m$) of the sample C is measured by subtracting the mass of the membrane filter from the total mass of dried mixed sample (hereinafter, referred to as sample C) and the membrane filter. Thereafter, the sample C is placed in a crucible together with a membrane filter and is burned and incinerated at 1300°C or higher. The residue remaining is barium oxide. The mass ($M_B$) of barium sulfate is determined by converting the mass of barium oxide to the mass of barium sulfate. The mass of the carbonaceous material is calculated by subtracting the mass $M_B$ from the mass $M_m$.

(Others)

The negative electrode plate can be formed in such a manner that a negative current collector is coated or filled with a negative electrode paste, which is then cured and dried to fabricate a non-formed negative electrode plate, and thereafter, the non-formed negative electrode plate is formed. The negative electrode paste is prepared, for example, by adding water and sulfuric acid (or sulfuric acid aqueous solution) to a lead powder, the polymer compound, and if necessary, at least one selected from the group consisting of an organic expander, a carbonaceous material, and other additives, and mixing the mixture. At the time of curing, it is preferable to cure the non-formed negative electrode plate at a higher temperature than room temperature and high humidity.
The formation can be performed by charging the element in the state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Positive electrode plate)

The positive electrode plate of a lead-acid battery can be classified into a paste type, a clad type, and the like. Either a paste-type or a clad-type positive electrode plate may be used. The paste-type positive electrode plate includes a positive current collector and a positive electrode material. The configuration of the clad-type positive electrode plate is as described above.

The positive current collector may be formed by casting lead (Pb) or a lead alloy, or may be formed by processing a lead sheet or a lead alloy sheet. Examples of the processing method include expanding processing or punching processing. It is preferable to use a grid-shaped current collector as the positive current collector because the positive electrode material is easy to be supported.

As a lead alloy used for the positive current collector, a Pb-Sb-based alloy, a Pb-Ca-based alloy, or a Pb-Ca-Sn-based alloy are preferred in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid part, only on the lug part, or only on the frame rib part of the positive current collector.

The positive electrode material contained in the positive electrode plate contains a positive active material (lead dioxide or lead sulfate) that exhibits a capacity through a redox reaction. The positive electrode material may contain another additive as needed.

A non-formed paste-type positive electrode plate is obtained by filling a positive current collector with a positive electrode paste, and curing and drying the paste. The positive electrode paste is prepared by kneading lead powder, an additive, water, and sulfuric acid. A non-formed clad-type positive electrode plate is formed by filling a porous tube, into which a spine connected by a current collecting portion is inserted with a lead powder or a slurry-like lead powder, and joining a plurality of tubes with a spine protector. Thereafter, the positive electrode plate is obtained by forming the non-formed positive electrode plates.

The formation can be performed by charging the element in the state where the element including the non-formed positive electrode plate immersed in the electrolyte solution containing sulfuric acid in the container of the lead-acid battery. However, the formation may be performed before the lead-acid battery or the element is assembled.

In the lead-acid battery, the PAM/NAM ratio is 1.4 or less. From the viewpoint of securing higher PSOC life performance, the PAM/NAM ratio is preferably 1.35 or less, and may be 1.3 or less or 1.25 or less. The PAM/NAM ratio is 1 or more. From the viewpoint of further reducing the reduction amount of the electrolyte solution, the PAM/NAM ratio is preferably 1.1 or more.

The PAM/NAM ratio may be 1 or more (or 1.1 or more) and 1.4 or less, 1 or more (or 1.1 or more) and 1.35 or less, 1 or more (or 1.1 or more) and 1.3 or less, or 1 or more (or 1.1 or more) and 1.25 or less.

The PAM/NAM ratio can be adjusted, for example, by adjusting the filling amount of the electrode material in each electrode plate.

The PAM/NAM ratio is determined by dividing the mass of the positive electrode material by the mass of the negative electrode material. The mass of the positive electrode material is performed using the positive electrode material collected from the positive electrode plate taken out of the lead-acid battery in the fully charged state. The mass of the positive electrode material is measured by the following procedure.

A lead-acid battery in a fully charged state is disassembled to obtain a positive electrode plate to be analyzed. The obtained positive electrode plate is washed with water for 3 to 4 hours and dried to remove the electrolyte solution in the positive electrode plate. The washed positive electrode plate is dried in a thermostatic chamber at 60°C $\pm$ 5°C for greater than or equal to 5 hours. After drying, when the sticking member is included in the positive electrode plate, the sticking member is removed from the positive electrode plate by peeling. The mass of the dried product (positive electrode plate) is measured. Next, the positive electrode material is dropped from the positive current collector, and the positive electrode material adhering to the positive current collector is removed by mannitol treatment. The obtained positive current collector is washed with water and dried, and then the mass of the positive current collector is measured. The mass of the positive electrode material is obtained by subtracting the mass of the positive current collector from the mass of the positive electrode plate. The mass of the positive electrode material in the cell is obtained by summing the masses of the positive electrode materials for all the positive electrode plates in the cell.

(Separator)

The separator can be disposed between the negative electrode plate and the positive electrode plate. As the separator, at least one selected from a nonwoven fabric and a microporous membrane, and the like are used.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among them, glass fibers are preferable. The nonwoven fabric may contain components other than the fibers (for example, an acid resistant inorganic powder and a polymer as a binder), and the like.

On the other hand, the microporous film is a porous sheet mainly made of components except for fiber components and is obtained by, for example, extrusion molding a composition containing, for example, a pore-forming additive into a sheet shape and then removing the pore-forming additive to form pores. The microporous film is preferably a microporous film made of a material having acid resistance and is preferably composed mainly of a polymer component. As the polymer component, a polyolefin (a polyethylene, a polypropylene, etc.) is preferable. Examples of the pore-forming additive include at least one selected from the group consisting of a polymer powder and oil.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded part is along the horizontal direction of the lead-acid battery (e.g., such that the bent part may be parallel to the horizontal direction), and the separator may be disposed such that the folded part is along the vertical direction (e.g., such that the bent part is parallel to the vertical direction). In the separator folded in the bellows shape, recesses are alternately formed on both main surface sides of the separator. Since the lug parts are usually formed on the upper part of the positive electrode plate and the negative electrode plate, when the separator is disposed such that the folded parts are along the horizontal direction of the lead-acid battery, the positive electrode plate and the negative electrode plate are each disposed only in the recess on one main surface side of the separator (i.e., a double separator is interposed between the adjacent positive and negative electrode plates). When the separator is disposed such that the folded part is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative electrode plates). When the bag-shaped separator is used, the bag-shaped separator may house the positive electrode plate or may house the negative electrode plate.

(Electrolyte solution)

The electrolyte solution is an aqueous solution containing sulfuric acid and may be gelled as necessary.

The polymer compound may be contained in the electrolyte solution.

The electrolyte solution may contain cations (for example, metal cations) and/or anions (for example, anions other than sulfate anions (such as phosphate ions)) if necessary. Examples of the metal cation include at least one selected from the group consisting of a Na ion, a Li ion, a Mg ion, and an Al ion.

The specific gravity of the electrolyte solution in the lead-acid battery in a fully charged state at 20°C is, for example, 1.20 or more and may be 1.25 or more. The specific gravity of the electrolyte solution at 20°C is 1.35 or less and preferably 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

(Others)

The lead-acid battery can be obtained by a manufacturing method including a step of storing an element and an electrolyte solution in a cell chamber of a container. Each cell of the lead-acid battery includes an element and an electrolyte solution stored in each cell chamber. The element is assembled by stacking a positive electrode plate, a negative electrode plate, and a separator such that the separator is interposed between the positive electrode plate and the negative electrode plate prior to storage in the cell chamber. The positive electrode plate, the negative electrode plate, the electrolyte solution, and the separator are each prepared prior to assembly of the element. A method of manufacturing the lead-acid battery may include a step of forming at least one of the positive electrode plate and the negative electrode plate as necessary after a step of storing the element and the electrolyte solution in the cell chamber.

The number of electrode plates in the element contained in one cell may be one or two or more. In the cell for determining the PAM/NAM ratio, when the element includes two or more negative electrode plates, it is preferable that in at least one negative electrode plate, the negative electrode material contains the polymer compound, and the PAM/NAM ratio of the cell satisfies the condition that the PAM/NAM ratio is in the above-described range. In this case, a decrease in charge acceptance of the negative electrode plate is suppressed, and an effect of improving the PSOC life performance and an effect of reducing the reduction amount of the electrolyte solution can be obtained according to the number of the negative electrode plates. From the viewpoint of securing higher PSOC life performance and further reducing the reduction amount of the electrolyte solution, it is preferable that 50% or more (more preferably 80% or more or 90% or more) of the number of negative electrode plates included in the element contains the polymer compound. Among the negative electrode plates included in the element, a ratio of the negative electrode plates containing the polymer compound is 100% or less. All negative electrode plates included in the element may contain the polymer compound.

When the lead-acid battery has two or more cells, it is sufficient that at least the element of the cell for determining the PAM/NAM ratio includes the negative electrode plate containing the polymer compound. From the viewpoint of securing higher PSOC life performance and further reducing the reduction amount of the electrolyte solution, it is preferable to include an element including a negative electrode plate having a PAM/NAM ratio in the above range and containing a polymer compound in 50% or more (more preferably 80% or more or 90% or more) of the number of cells contained in the lead-acid battery. Among the cells contained in the lead-acid battery, the ratio of cells having a PAM/NAM ratio in the above range and including an element including a negative electrode plate containing a polymer compound is 100% or less. It is preferable that all of the elements included in the lead-acid battery include an element including a negative electrode plate having a PAM/NAM ratio in the above range and containing a polymer compound.

Fig. 1 shows an appearance of an example of a lead-acid battery according to an embodiment of the present invention.

A lead-acid battery 1 includes a container 12 that houses an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and a plurality of positive electrode plates 3 with a separator 4 interposed therebetween. At this point, the bag-shaped separator 4 accommodating the negative electrode plate 2 is illustrated, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each penetrating connection body 8 passes through a through-hole made in the partition 13 to connect the elements 11 of the adjacent cell chambers 14 in series.

The positive electrode shelf 5 is formed by welding the lug parts, provided on the upper parts of the respective positive electrode plates 3, to each other by a cast-on-strap method or a burning method. The negative electrode shelf 6 is also formed by welding the lug parts, provided on the upper parts of the respective negative electrode plates 2, to each other in accordance with the case of the positive electrode shelf 5.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

In the present specification, each of the PSOC life performance and the reduction amount of the electrolyte solution is evaluated by the following procedure. A test battery used for the evaluation has a rated voltage of 12 V and a rated 20-hour rate capacity of 60 Ah.

(a) PSOC Life performance

Using the test battery, a PSOC test is performed under an idling stop condition in accordance with EN 50342-6.

Specifically, the lead-acid battery is subjected to the following (Discharge 1) in a water tank at 25°C $\pm$ 2°C, and then the following (Charge 1) and (Discharge 2) as one cycle are repeated 85 cycles. When a discharge end voltage becomes 10 V or less, charge and discharge are terminated, and the number of cycles at this time is obtained. When the voltage does not become 10 V or less by 85 cycles, the process sequentially proceeds to the following steps (Charge 2), (Discharge 3), and (Charge 3), and returns to (Discharge 1). Such an operation is repeated until the discharge end voltage becomes 10 V or less. The PSOC life performance is evaluated by a ratio (%) when the number of cycles in lead-acid battery C1 is 100.

(Discharge 1) Regulating discharge is performed at a current value of 12 A for 2.5 hours.

(Charge 1) Charge is performed at a voltage of 14.4 V (maximum current 21 A) for 40 minutes.

In (Discharge 2), discharge is performed at a current value of 21 A for 30 minutes.

(Charge 2) Charge is performed at a voltage of 16.0 V (maximum current 6 A) for 18 hours.

(Discharge 3) Discharge is performed at a current of 3 A until the voltage reaches 10.5 V.

(Charge 3) Charge is performed at a constant voltage of 16.0 V (maximum current 15 A) for 24 hours.

(b) Reduction amount of electrolyte solution

A mass ($M_0$) of the test battery is measured. The test battery is subjected to constant voltage charge at 14.4 V and a maximum current of 50

A for 84 days in a water bath at 60°C $\pm$ 5°C. After charge, the test battery taken out from the water bath is allowed to stand until the temperature reaches room temperature (20 to 35°C), and then a mass ($M_1$) of the test battery is measured. The reduction amount of the electrolyte solution is obtained by subtracting $M_1$ from $M_0$.

The lead-acid battery according to one aspect of the present invention will be described below.

(1) A lead-acid battery comprising at least one cell including an element and an electrolyte solution,

wherein the element includes a negative electrode plate, a positive electrode plate, and a separator interposed between the negative electrode plate and the positive electrode plate,
the negative electrode plate includes a negative electrode material,
the negative electrode material contains a polymer compound having a peak in a range of 3.2 ppm or more and 3.8 ppm or less in a chemical shift of $^1$H-NMR spectrum measured using deuterated chloroform as a solvent,
the positive electrode plate includes a positive electrode material, and
a mass ratio of the positive electrode material to the negative electrode material is 1 or more and 1.4 or less.

(2) In (1) above, the polymer compound may contain an oxygen atom bonded to a terminal group and a -CH$_2$- group and/or a -CH< group bonded to the oxygen atom, and
in the $^1$H-NMR spectrum, a ratio of an integrated value of the peak to a sum of the integrated value of the peak, an integrated value of a peak of a hydrogen atom of the -CH$_2$- group, and an integrated value of a peak of a hydrogen atom of the -CH< group may be 85% or more.

(3) In (1) or (2) above, the polymer compound may contain a repeating structure of oxy C$_{2-4}$ alkylene units.

(4) A lead-acid battery comprising at least one cell including an element and an electrolyte solution,

wherein the element includes a negative electrode plate, a positive electrode plate, and a separator interposed between the negative electrode plate and the positive electrode plate,
the negative electrode plate includes a negative electrode material,
the negative electrode material contains a polymer compound containing a repeating structure of oxy C$_{2-4}$ alkylene units,
the positive electrode plate includes a positive electrode material, and
a mass ratio of the positive electrode material to the negative electrode material is 1 or more and 1.4 or less.

(5) In any one of (1) to (4) above, the mass ratio may be 1.1 or more.

(6) In any one of (1) to (5) above, the mass ratio may be 1.35 or less, 1.3 or less, or 1.25 or less.

(7) In any one of (1) to (6) above, the content of the polymer compound in the negative electrode material may be 8 ppm or more, 10 ppm or more, 20 ppm or more, or 30 ppm or more on a mass basis.

(8) In any one of (1) to (7) above, the content of the polymer compound in the negative electrode material may be 1,000 ppm or less, less than 1,000 ppm, 700 ppm or less, 600 ppm or less, 550 ppm or less, 500 ppm or less, or 400 ppm or less on a mass basis.

(9) In any one of (1) to (8) above, the polymer compound may contain a compound having Mn of 5 million or less, 1 million or less, 100,000 or less, 20,000 or less, 10,000 or less, 5,000 or less, 3,000 or less, 2,500 or less, or 2,000 or less.

(10) In (9) above, Mn of the compound may be 300 or more, 400 or more, or 500 or more.

(11) In any one of (1) to (10) above, the polymer compound may contain at least one selected from the group consisting of a hydroxy compound having a repeating structure of oxy $C_{2-4}$ alkylene units, an etherified product of the hydroxy compound, and an esterified product of the hydroxy compound, and the hydroxy compound may be at least one selected from the group consisting of poly $C_{2-4}$ alkylene glycols, copolymers containing a repeating structure of oxy $C_{2-4}$ alkylene, and $C_{2-4}$ alkylene oxide adducts of polyols.

(12) In any one of (1) to (11) above, the polymer compound may contain a repeating structure of oxypropylene units.

(13) In (12) above, the polymer compound may contain at least one selected from the group consisting of polypropylene glycol, a polyoxypropylene-polyoxyethylene copolymer (such as a polyoxypropylene-polyoxyethylene block copolymer), a polypropylene glycol alkyl ether (such as alkyl ether (such as methyl ether, ethyl ether, or butyl ether) in which the $R^2$ is an alkyl having 10 or less carbon atoms (or 8 or less or 6 or less carbon atoms)), a polyoxyethylene-polyoxypropylene alkyl ether (such as alkyl ether (such as butyl ether or hydroxyhexyl ether) in which the $R^2$ is an alkyl having 10 or less carbon atoms (or 8 or less or 6 or less carbon atoms)), a polypropylene glycol carboxylate (such as polypropylene glycol carboxylate (such as polypropylene glycol acetate) in which the $R^3$ is an alkyl having 10 or less carbon atoms (or 8 or less or 6 or less carbon atoms)), and a polypropylene oxide adduct of polyol of triol or higher (such as polypropylene oxide adduct of glycerin).

(14) In any one of (1) to (11) above, the polymer compound may have one or more hydrophobic groups, and at least one of the hydrophobic groups may be a long-chain aliphatic hydrocarbon group having 8 or more carbon atoms.

(15) In (14) above, the number of carbon atoms of the long-chain aliphatic hydrocarbon group may be 12 or more or 16 or more.

(16) In (14) or (15) above, the number of carbon atoms of the long-chain aliphatic hydrocarbon group may be 30 or less, 26 or less, or 22 or less.

(17) In any one of (11) and (14) to (16) above, the polymer compound may contain a repeating structure of oxyethylene units.

(18) In (17) above, the polymer compound may contain at least one selected from the group consisting of etherified products (such as alkyl ethers) of polyethylene glycol, esterified products (such as carboxylic acid esters) of polyethylene glycol, etherified products (such as alkyl ethers) of the polyethylene oxide adduct of the polyol, and esterified products of the polyethylene oxide adduct (such as carboxylic acid esters) of a polyol (such as polyol of triol or higher).

(19) In (17) or (18) above, the polymer compound may contain at least one selected from the group consisting of polyethylene glycol oleate, polyethylene glycol dioleate, polyethylene glycol dilaurate, polyethylene glycol distearate, polyoxyethylene coconut oil fatty acid sorbitan, polyoxyethylene sorbitan oleate, polyoxyethylene sorbitan stearate, polyoxyethylene lauryl ether, polyoxyethylene tetradecyl ether, and polyoxyethylene cetyl ether.

(20) In any one of (17) to (19) above, HLB of the polymer compound may be 4 or more, or 4.3 or more.

(21) In any one of (17) to (20) above, HLB of the polymer compound may be 18 or less, 10 or less, 9 or less, or 8.5 or less.

(22) In any one of (1) to (21) above, the content of the organic expander contained in the negative electrode material may be 0.005% by mass or more or 0.01% by mass or more.

(23) In any one of (1) to (22) above, the content of the organic expander in the negative electrode material may be 1.0% by mass or less, 0.5% by mass or less, 0.3% by mass or less, or 0.25% by mass or less.

(24) In any one of (1) to (23) above, the content of the carbonaceous material in the negative electrode material may be 0.05% by mass or more, or 0.10% by mass or more.

(25) In any one of (1) to (24) above, the content of the carbonaceous material in the negative electrode material may be 5% by mass or less, or 3% by mass or less.

(26) In any one of (1) to (25) above, the negative electrode material may further contain barium sulfate.

(27) In (26) above, the content of the barium sulfate in the negative electrode material may be 0.05% by mass or more or 0.10% by mass or more.

(28) In (26) or (27) above, the content of the barium sulfate in the negative electrode material may be 3% by mass or less or 2% by mass or less.

(29) In any one of (1) to (28) above, the specific gravity of the electrolyte solution at 20°C in the lead-acid battery in a fully charged state may be 1.20 or more or 1.25 or more.

(30) In any one of (1) to (29) above, the specific gravity of the electrolyte solution at 20°C in the lead-acid battery in a fully charged state may be 1.35 or less or 1.32 or less.

EXAMPLES

Hereinafter, the present invention is specifically described on the basis of examples and comparative examples, but the present invention is not limited to the following examples.

<<Lead-acid batteries E1 to E20, R1 to R2, and C1 to C5>>

(1) Preparation of lead-acid battery

(a) Preparation of negative electrode plate

A lead powder as a raw material, barium sulfate, carbon black, polymer compounds shown in Tables 1 to 4, and sodium lignin sulfonate are mixed with an appropriate amount of a sulfuric acid aqueous solution to obtain a negative electrode paste. At this time, the components are mixed so that the polymer compounds in the negative electrode materials, which are determined by the procedure described above, are the values shown in Tables 1 to 4, sodium lignin sulfonate is 0.1% by mass, the content of barium sulfate is 0.4% by mass, and the content of carbon black is 0.2% by mass. A mesh portion of an expanded grid made of a Pb-Ca-Sn alloy is filled with the negative electrode paste, which is then cured and dried to obtain a non-formed negative electrode plate.

For the lead-acid battery fully charged after formation, the filling amount of the negative electrode paste is adjusted so that the PAM/NAM ratio determined by the procedure described above is the value shown in Table.

(b) Preparation of positive electrode plate

Lead powder as raw material is mixed with a sulfuric acid aqueous solution to obtain a positive electrode paste. A mesh portion of an expanded grid made of a Pb-Ca-Sn alloy is filled with the positive electrode paste, which is then cured and dried to obtain a non-formed positive electrode plate.

For the lead-acid battery fully charged after formation, the filling amount of the positive electrode paste is adjusted so that the PAM/NAM ratio determined by the procedure described above is the value shown in Table.

(c) Preparation of test battery

A test battery has a rated voltage of 12 V and a rated 20-hour rate capacity of 60 Ah. An element of the test battery includes seven positive electrode plates and eight negative electrode plates. The negative electrode plate is housed in a bag-shaped separator formed of a polyethylene microporous film, and alternately stacked with the positive electrode plate to form the element. The element is housed in a polypropylene container together with an electrolyte solution (sulfuric acid aqueous solution), and subjected to formation in the container to prepare a flooded-type lead-acid battery. The specific gravity of the electrolyte solution in the lead-acid battery in the fully charged state at 20°C is 1.28.

When the polymer compound has a repeating structure of oxyethylene units, in the $^1$H-NMR spectrum of the polymer compound measured by the procedure described above, a peak derived from $-CH_2-$ of the oxyethylene unit is observed in a chemical shift range of 3.2 ppm or more and 3.8 ppm or less. When the polymer compound has a repeating structure of oxyethylene units, in the $^1$H-NMR spectrum of the polymer compound measured by the procedure described above, a peak derived from $-CH_2-$ of the oxypropylene unit is observed in a chemical shift range of 3.2 ppm or more and 3.42 ppm or less, and a peak derived from -CH< and $-CH_2-$ of the oxypropylene unit is observed in a chemical shift range of more than 3.42 ppm and 3.8 ppm or less. In addition, in the $^1$H-NMR spectrum, a ratio of an integrated value of the peak of 3.2 ppm to 3.8 ppm to the sum of the integrated value of the peak of 3.2 ppm to 3.8 ppm, an integrated value of peaks of hydrogen atoms of the $-CH_2-$ group bonded to the oxygen atom, and an integrated value of a peak of a hydrogen atom of the -CH< group bonded to the oxygen atom is 96% to 100%.

(2) Evaluation

(a) Evaluation 1: PSOC life performance

A PSOC test is performed by the procedure described above using the lead-acid battery. The PSOC life performance is evaluated by a ratio (%) of the number of cycles of each lead-acid battery when the number of cycles in the lead-acid battery C1 is 100.

(b) Evaluation 2: Reduction amount of electrolyte solution

The reduction amount of the electrolyte solution is determined by the procedure described above using the lead-acid battery. The reduction amount of the electrolyte solution is evaluated by a ratio (%) when the reduction amount of the electrolyte solution in the lead-acid battery C1 is 100.

Tables 1 to 4 show the results. The table also shows the Mn and HLB of the polymer compounds. Mn of the etherified product or esterified product shown in the table is Mn of the etherified product or esterified product used for preparation of the negative electrode material. Mn of PPG shown in Table 2 is Mn determined by the procedure described above. E1 to E20 are examples. R1 to R2 are reference examples. C1 to C5 are comparative examples.

[Table 1]

| No. | PAM/NAM Ratio | Polymer compound | | | | PSOC Life performance (%) | Reduction amount of electrolyte solution (%) |
|---|---|---|---|---|---|---|---|
| | | Type | Mn | HLB | Content (mass ppm) | | |
| C1 | 1.50 | - | - | - | 0 | 100 | 100 |
| C2 | 1.40 | - | - | - | 0 | 123 | 139 |
| C3 | 1.25 | - | - | - | 0 | 120 | 172 |
| C4 | 1.20 | - | - | - | 0 | 115 | 190 |
| C5 | 1.10 | - | - | - | 0 | 105 | 220 |
| R1 | 1.50 | PEG oleate | 500 | 8.4 | 200 | 95 | 57 |
| E1 | 1.40 | PEG oleate | 500 | 8.4 | 200 | 134 | 65 |
| E2 | 1.35 | | | | | 150 | 70 |
| E3 | 1.25 | | | | | 165 | 75 |
| E4 | 1.10 | | | | | 170 | 90 |
| E5 | 1.00 | | | | | 168 | 97 |
| PEG: Polyethylene glycol | | | | | | | |

As shown in Table 1, when the PAM/NAM ratio is > 1.4, the negative electrode material contains the polymer compound, so that the reduction amount of the electrolyte solution decreases, but the PSOC life performance is deteriorated (comparison between C1 and R1). This is considered to be because in R1, the polymer compound also adheres to the surface of lead sulfate, so that lead sulfate is more likely to accumulate than in C1, and the PSOC life performance is deteriorated.

In the case where the negative electrode material does not contain the polymer compound, when the PAM/NAM ratio is $\leq$ 1.4, the PSOC life performance is slightly improved as compared with when the PAM/NAM ratio is > 1.4, but the reduction amount of the electrolyte solution becomes remarkable (comparison between C1 and C2 to C5). On the other hand, when the negative electrode material contains the polymer compound when the PAM/NAM ratio is $\leq$ 1.4, the reduction amount of the electrolyte solution is reduced, and the PSOC life performance is greatly improved (comparison between C2 to C5 and E1 to E5). The reduction amount of the electrolyte solution is considered to be reduced because the polymer compound is contained in the negative electrode material, thereby increasing hydrogen overvoltage, and suppressing generation of hydrogen gas during charge and overcharge. In addition, when the negative electrode material contains the polymer compound, the increase in the reduction amount of the electrolyte solution becomes gentle even if the PAM/NAM ratio decreases, as compared with the case where the negative electrode material does not contain the polymer compound.

As described above, behavior of the PSOC life performance is completely different between the PAM/NAM ratio > 1.4 and the PAM/NAM ratio $\leq$ 1.4 depending on the presence or absence of the polymer compound. This suggests that modes in which the lead-acid battery comes to the end of its life are different between the PAM/NAM ratio > 1.4 and the PAM/NAM ratio $\leq$ 1.4 When the PAM/NAM ratio is $\leq$ 1.4 or less, the positive electrode is regulated, and the life mode is softening and falling off of the positive electrode material. Therefore, in E1 to E5, it is considered that gas generation is suppressed by the polymer compound, so that falling off of the positive electrode material is suppressed, and thus the PSOC life performance is greatly improved. From the viewpoint of further reducing the reduction amount of the electrolyte solution, the PAM/NAM ratio is preferably 1.1 or more.

[Table 2]

| No. | PAM/NAM Ratio | Polymer compound | | | PSOC Life performance (%) | Reduction amount of electrolyte solution (%) |
|---|---|---|---|---|---|---|
| | | Type | Mn | Content (mass ppm) | | |
| C1 | 1.50 | - | - | 0 | 100 | 100 |
| R2 | 1.50 | PPG | 2000 | 370 | 94 | 64 |
| E6 | 1.40 | PPG | 2000 | 370 | 129 | 74 |
| E7 | 1.25 | | | | 141 | 83 |
| E8 | 1.10 | | | | 143 | 96 |
| E9 | 1.25 | | | 320 | 146 | 95 |
| PPG: Polypropylene glycol | | | | | | |

As shown in Table 2, even when polypropylene glycol is used as the polymer compound, the same or similar effect as in the case of Table 1 using polyethylene glycol oleate is obtained. More specifically, when the PAM/NAM ratio is > 1.4, the PSOC life performance is deteriorated even when the negative electrode material contains a polymer compound (comparison between R2 and C1). On the other hand, when the PAM/NAM ratio is ≤ 1.4, high PSOC life performance can be secured while reducing the reduction amount of the electrolyte solution (comparison between C1 and R2 and E6 to E9).

[Table 3]

| No. | PAM/NAM Ratio | Polymer compound | | | | PSOC Life performance (%) | Reduction amount of electrolyte solution (%) |
|---|---|---|---|---|---|---|---|
| | | Type | Mn | HLB | Content (mass ppm) | | |
| C1 | 1.50 | - | - | - | 0 | 100 | 100 |
| E3 | 1.25 | PEG oleate | 500 | 8.4 | 200 | 165 | 75 |
| E10 | | PEG dilaurate | 630 | 6.6 | | 168 | 77 |
| E11 | | PEG distearate | 800 | 7.3 | | 167 | 76 |
| E12 | | PEG dioleate | 880 | 8.4 | | 170 | 75 |
| E13 | | POE sorbitan oleate | 400 | 4.3 | | 167 | 76 |
| PEG: Polyethylene glycol POE: Polyoxyethylene | | | | | | | |

As shown in Table 3, even when the negative electrode material contains other polymer compounds, as in Table 1 or Table 2, high PSOC life performance can be secured while reducing the reduction amount of the electrolyte solution. The polymer compounds shown in Table 3 are classified into nonionic surfactants. The HLB of the polymer compound is preferably 4 or more (or 4.3 or more) and 9 or less, or 4 or more (or 4.3 or more) and 8.5 or less from the viewpoint of achieving an excellent balance between suppression of the reduction of the electrolyte solution and improvement in the PSOC life performance.

[Table 4]

| No. | PAM/NAM Ratio | Polymer compound | | | | PSOC Life performance (%) | Reduction amount of electrolyte solution (%) |
|---|---|---|---|---|---|---|---|
| | | Type | Mn | HLB | Content (mass ppm) | | |
| C1 | 1.50 | - | - | - | 0 | 100 | 100 |
| C3 | 1.25 | - | - | - | 0 | 120 | 172 |
| E14 | | | | | 20 | 135 | 92 |
| E15 | | | | | 30 | 160 | 90 |
| E16 | | | | | 50 | 163 | 85 |
| E17 | 1.25 | PEG oleate | 500 | 8.4 | 200 | 165 | 75 |
| E18 | | | | | 400 | 162 | 55 |
| E19 | | | | | 500 | 150 | 49 |
| E20 | | | | | 550 | 130 | 47 |
| PEG: Polyethylene glycol | | | | | | | |

From the viewpoint of further suppressing the reduction amount of the electrolyte solution low, the content of the polymer compound in the negative electrode material is preferably 10 ppm or more, and more preferably 20 pm or more or 30 ppm or more. From the viewpoint of securing higher PSOC life performance, the content of the polymer compound in the negative electrode material is preferably 600 ppm or less or 550 ppm or less, and more preferably 500 ppm or less or 400 ppm or less.

INDUSTRIAL APPLICABILITY

The lead-acid battery according to one aspect and another aspect of the present invention is suitable for use in an idling stop vehicle as, for example, a lead-acid battery for IS that is charged and discharged under PSOC conditions. The lead-acid battery can be suitably used as, for example, a power source for starting a vehicle (automobiles, motorcycles, etc.), and an industrial energy storage apparatus (for example, a power source of an electric vehicle (such as forklift) or the like). Note that these are merely illustrative, and the application of the lead-acid battery is not limited thereto.

DESCRIPTION OF REFERENCE SIGNS

1: lead-acid battery
2: negative electrode plate
3: positive electrode plate
4: separator
5: positive electrode shelf
6: negative electrode shelf
7: positive pole
8: penetrating connection body
9: negative pole
11: element
12: container
13: partition
14: cell chamber
15: lid
16: negative electrode terminal
17: positive electrode terminal
18: vent plug

**Claims**

1. A lead-acid battery comprising at least one cell comprising an element and an electrolyte solution,

   wherein the element includes a negative electrode plate, a positive electrode plate, and a separator interposed between the negative electrode plate and the positive electrode plate,
   the negative electrode plate includes a negative electrode material,
   the negative electrode material contains a polymer compound having a peak in a range of 3.2 ppm or more and 3.8 ppm or less in a chemical shift of $^1$H-NMR spectrum measured using deuterated chloroform as a solvent,
   the positive electrode plate includes a positive electrode material, and
   a mass ratio of the positive electrode material to the negative electrode material is 1 or more and 1.4 or less.

2. The lead-acid battery according to claim 1, wherein

   the polymer compound contains an oxygen atom bonded to a terminal group and a $-CH_2-$ group and/or a $-CH<$ group bonded to the oxygen atom, and
   in the $^1$H-NMR spectrum, a ratio of an integrated value of the peak to a sum of the integrated value of the peak, an integrated value of a peak of a hydrogen atom of the $-CH_2-$ group, and an integrated value of a peak of a hydrogen atom of the $-CH<$ group is 85% or more.

3. The lead-acid battery according to claim 1 or 2, wherein the polymer compound contains a repeating structure of oxy $C_{2-4}$ alkylene units.

4. A lead-acid battery comprising at least one cell comprising an element and an electrolyte solution,

   wherein the element includes a negative electrode plate, a positive electrode plate, and a separator interposed between the negative electrode plate and the positive electrode plate,
   the negative electrode plate includes a negative electrode material,
   the negative electrode material contains a polymer compound containing a repeating structure of oxy $C_{2-4}$ alkylene units,
   the positive electrode plate includes a positive electrode material, and
   a mass ratio of the positive electrode material to the negative electrode material is 1 or more and 1.4 or less.

5. The lead-acid battery according to any one of claims 1 to 4, wherein the mass ratio is 1.1 or more.

6. The lead-acid battery according to any one of claims 1 to 5, wherein the content of the polymer compound in the negative electrode material is 600 ppm or less on a mass basis.

7. The lead-acid battery according to any one of claims 1 to 6, wherein the content of the polymer compound in the negative electrode material is 10 ppm or more on a mass basis.

8. The lead-acid battery according to any one of claims 1 to 7, wherein

   the polymer compound contains at least one selected from the group consisting of a hydroxy compound having a repeating structure of oxy $C_{2-4}$ alkylene units, an etherified product of the hydroxy compound, and an esterified product of the hydroxy compound, and
   the hydroxy compound is at least one selected from the group consisting of poly $C_{2-4}$ alkylene glycols, copolymers containing a repeating structure of oxy $C_{2-4}$ alkylene, and $C_{2-4}$ alkylene oxide adducts of polyols.

9. The lead-acid battery according to any one of claims 1 to 8, wherein the polymer compound contains a repeating structure of oxypropylene units.

10. The lead-acid battery according to claim 8, wherein the polymer compound has one or more hydrophobic groups, and at least one of the hydrophobic groups is a long-chain aliphatic hydrocarbon group having 8 or more carbon atoms.

11. The lead-acid battery according to claim 8 or 10, wherein the polymer compound contains a repeating structure of oxyethylene units.

Fig. 1

## INTERNATIONAL SEARCH REPORT

| International application No. |
| --- |
| **PCT/JP2021/039830** |

| A. | CLASSIFICATION OF SUBJECT MATTER |
| --- | --- |

*H01M 4/14*(2006.01)i; *H01M 4/62*(2006.01)i; *H01M 10/06*(2006.01)i
FI:  H01M10/06 Z; H01M4/14 Q; H01M4/62 B

According to International Patent Classification (IPC) or to both national classification and IPC

| B. | FIELDS SEARCHED |
| --- | --- |

Minimum documentation searched (classification system followed by classification symbols)

H01M4/14; H01M4/62; H01M10/06

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 60-182662 A (JAPAN STORAGE BATTERY CO., LTD.) 18 September 1985 (1985-09-18)<br>     entire text, all drawings | 1-11 |
| A | JP 9-147869 A (SHIN KOBE ELECTRIC MACH. CO., LTD.) 06 June 1997 (1997-06-06)<br>     entire text, all drawings | 1-11 |
| A | JP 2016-177909 A (GS YUASA CORP.) 06 October 2016 (2016-10-06)<br>     paragraphs [0020]-[0022] | 1-11 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 December 2021** | **28 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/039830**

| Patent document cited in search report | | | Publication date (day/month/year) | Patent family member(s) | Publication date (day/month/year) |
|---|---|---|---|---|---|
| JP | 60-182662 | A | 18 September 1985 | (Family: none) | |
| JP | 9-147869 | A | 06 June 1997 | (Family: none) | |
| JP | 2016-177909 | A | 06 October 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000149981 A

- WO 2017099144 A